# EUROPEAN PATENT SPECIFICATION

(11) **EP 0 616 767 B1**
(45) Date of publication and mention of the grant of the patent: **27.08.1997**
(21) Application number: 94302054.5
(22) Date of filing: 22.03.1994
(51) Int. Cl.: A01K 63/04

(54) **Aquarium tank filter flow regulator**
Durchflussregler für Filter für Aquarium-Gehäuse
Régulateur de débit pour filtre pour réservoir aquarium

(30) Priority: 23.03.1993 JP 18907/93 U
(43) Date of publication of application: 28.09.1994
(73) Proprietor: NISSO INDUSTRY CO., LTD., Tokyo 121 (JP)
(72) Inventor: Kikuta, Toshiki, c/o Nisso Industry Co., Ltd., Tokyo, 121 (JP)
(74) Representative: Smith, Norman Ian

(56) References cited:
- EP-A- 0 411 559
- JP-U- 582 262

## Description

This invention relates to a flow regulator for an aquarium tank filter used in an aquarium tank for keeping and displaying tropical fish or the like.

The usual aquarium tank comprises a tank body, a cover, an illuminator, a filter, etc.

Of these aquarium tank components, the filter serves to filter out contaminants from the water in the tank both physically and biologically.

The illuminator and filter are designed so as to cover the open top of the tank body.

Figure 5 is a schematic perspective view of a prior art aquarium tank, similar to that described in JP-U-5-82262, but including a second filter.

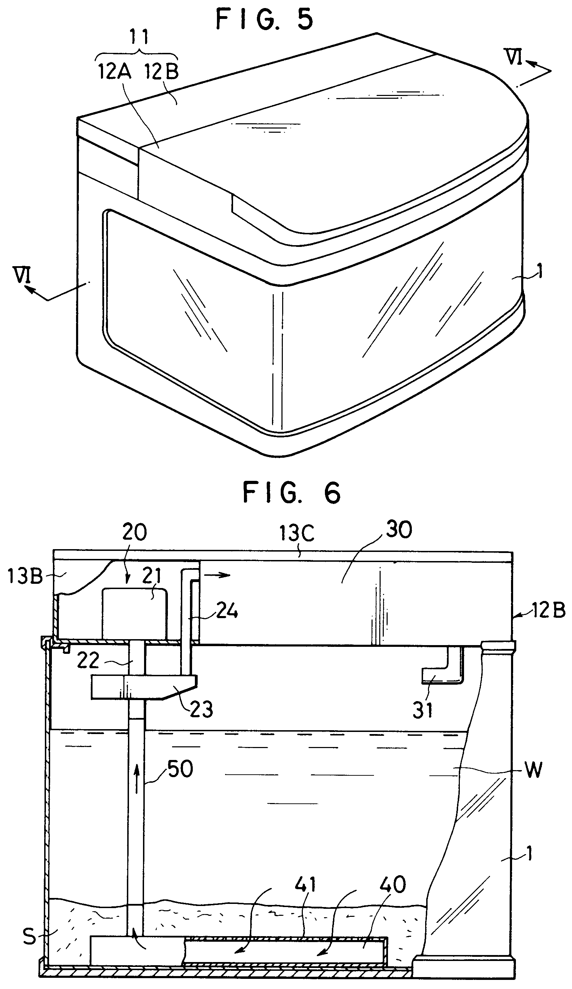

Referring to Figure 5, reference numeral 1 designates a tank body open at the top, and 11 a cover covering the open top of the tank body 1. The cover 11 is equipped on its underside with an illuminator 12A fitted with fluorescent lamps and also has a filter 12B for filtering the water in the tank body 1.

The illuminator 12A is disposed so as to cover the front part of the top of the tank body 1, while the filter 12B is disposed so as to cover the rear part of the top of the tank body 1.

Figure 6 is a sectional view taken along line VI-VI in Figure 5.

Referring to Figure 6, the filter 12B includes a filter tank casing 13B, a cover 13C covering the open top of the filter tank casing 13B, a pump mechanism 20 partly accommodated in the filter tank casing 13B, a first filter mechanism 30 mostly accommodated in the filter tank casing 13B, a second filter mechanism 40 disposed on the bottom of the tank body 1, and a connecting pipe 50 which connects the second filter mechanism 40 and pump mechanism 20. The structure of the first filter mechanism 30 is not shown.

The pump mechanism 20 includes a motor 21 accommodated in the filter tank casing 13B, a cylindrical member 22 extending from the motor 21 into the tank body 1, an intermediate frame 23 provided on the lower end of the cylindrical member 22 and accommodating a rotary vane assembly (not shown), and a water force-up pipe 24 extending from the intermediate frame 23 into the filter tank casing 13B and having an end connected to the first filter mechanism 30.

The first filter mechanism 30 serves to filter out floating matter from water W received from the force-up pipe 24 physically with chemical fibers or like filtering material. It is provided with an L-shaped drain pipe 31 for returning the filtered water W into the tank body 1.

The second filter mechanism 40 serves to filter out organic matter dissolved in the water W in the tank body 1 biologically by the action of bacteria living in a filtering material such as gravel. It has a casing 41 with a plurality of thin slits or the like through which the water W can enter.

The bottom of the tank body 1 is covered with small stones (gravel, for example) to a level higher than the second filter mechanism 40.

The operation of the filter system will now be described.

By operating the motor 21, water W that has been filtered biologically in the second filter mechanism 40 is supplied through the connecting pipe 50, the intermediate frame 23 and the force-up pipe 24 to the first filter mechanism 30.

The water W supplied to the first filter mechanism 30 is physically filtered to remove particles or like floating matter, and then discharged through the drain pipe 31 into the tank body 1.

The water W which is thus returned to the tank body 1, passes among the small stones S to enter the second filter mechanism 40 for biological filtering.

The water W in the tank body 1 is thus filtered both physically and biologically in the first and second filter mechanisms 30 and 40, whereby satisfactory water quality can be maintained.

In the above prior art aquarium tank filter, the first filter mechanism 30 disposed atop the tank body 1 and the second filter mechanism 40 disposed on the bottom of the tank body 1 are connected to each other by the connecting pipe 50 with the pump mechanism 20 provided between the pipe 50 and the pipe 24 for providing physical filtering in the first filter mechanism 30 and biological filtering in the second filter mechanism 40.

Therefore, while water W in the tank body 1 passes among the small stones S in the tank body 1 on its way to the second filter mechanism 40, or since the physical filtering is done in the second filter mechanism 40, no physical filtering is done in the first filter mechanism 30.

In addition, clog of the spaces among the small stones S readily occurs and, therefore, it frequently becomes necessary to change the water W and clean the tank body 1.

The first filter mechanism 30 is disposed atop the tank body 1 to enable easy replacement of the filtering material when the material clogs.

EP 411 559 discloses a reversible aquarium pump with which flow through a suction pipe can be adjusted. When operated in normal mode water from the tank is drawn through a sand filter up a suction pipe by a pump and expelled back into the tank. The water flow path can be partially obstructed to reduce the amount of water which is pumped through the filter. When operated in reverse mode the filter is cleaned by water which is drawn directly from the tank into the pump and driven down the suction pipe and backwards through the filter.

The object of this invention is to overcome the aforesaid inconveniences by providing an aquarium tank filter flow regulator which enables the individual filter mechanisms to achieve their respective functions, thereby making it possible to increase the interval between water changes and the interval between tank cleanings.

According to the present invention there is provided an aquarium tank comprising a first filter mechanism for performing physical filtering, a second filter mechanism for performing biological filtering, a pipe disposed between said first and second filter mechanisms and a filter flow regulator disposed in said pipe, characterised in that:
said filter flow regulator is provided for adjusting a ratio of water supplied directly to said first filter mechanism and water supplied through said second filter mechanism to said first filter mechanism; and
said filter flow regulator comprises:
a stationary tube having its peripheral wall formed with a plurality of stationary slits; and
an opening area adjusting member disposed for rotation or axial sliding inside said stationary tube and having a plurality of rotary slits; overlapping portions of said rotary slits and said stationary slits constituting an opening area that can be varied by rotating or sliding said opening area adjusting member.

With the aquarium tank filter flow regulator according to the invention, the opening area formed by overlapping portions of the stationary and rotary slits can be varied to vary the opening area through which water flows by rotating and/or sliding of opening area adjusting member.

A preferred embodiment of the present invention will be described by way of example only with reference to the accompanying drawings in which:-
Figure 1 is an exploded side view showing an embodiment of the aquarium tank filter flow regulator according to the invention;
Figure 2 is a sectional view, taken along line II-II in Figure 1, showing the aquarium tank filter - flow regulator in the assembled state;
Figure 3 is a front view, partially in section, showing an aquarium tank incorporating the aquarium tank filter flow regulator according to the invention;
Figure 4A is a perspective view showing one example of a stationary tube body for use in the aquarium tank filter flow regulator according to the present invention;
Figure 4B is a perspective view showing another example of the stationary tube body of the present invention;
Figure 4C is a perspective view showing one example of an opening area adjusting member for use in the aquarium tank filter flow regulator according to the present invention;
Figure 4D is a perspective view showing another example of the opening area adjusting member of the present invention;
Figure 5 is a schematic perspective view showing an example of a prior art aquarium tank; and
Figure 6 is a sectional view taken along line VI-VI in Figure 5.

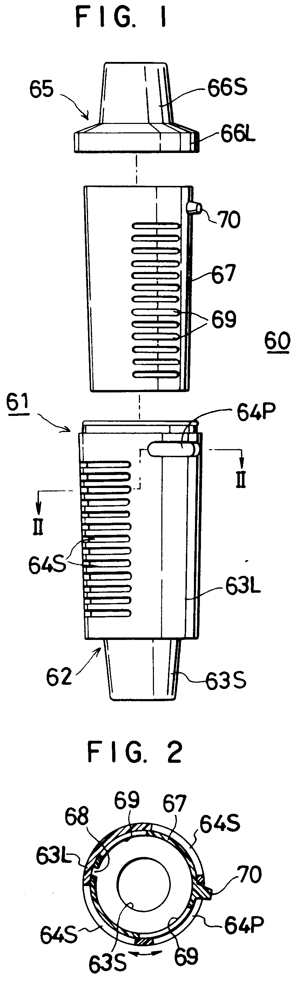

Referring to Figure 1, reference numeral 60 designates a flow regulator comprising a stationary tube 61 and an opening area adjusting member 67 accommodated in the stationary tube 61.

The stationary tube 61 includes a tube body 62 and a cap 65. The tube body 62 has a large diameter portion 63L and a small diameter portion 63S extending from the lower end of the large diameter portion 63L. The large diameter portion 63L has the peripheral wall thereof formed with a plurality of thin stationary slits 64S extending in the circumferential direction and arranged in a row in the axial direction and also with a knob guide slit 64P extending in the circumferential direction. The cap 65 has a large diameter portion 66L and a small diameter portion 66S extending upward therefrom. The upper end of the large diameter portion 63L of the tube body 62 is fitted in the lower end of the large diameter portion 66L of the cap 65.

The opening area adjusting member 67 having an axial slit 68 has its peripheral wall formed with slits 69 extending in the circumferential direction and arranged in a row in the axial direction. The member 67 also has a knob 70 that projects through the knob guide slit 64P when the flow regulator 60 is assembled.

The opening area adjusting member 67 is made of an elastic material.

For assembling of the flow regulator 60, the opening area adjusting member 67 is pushed into the large diameter portion 63L of the tube body 62 with the ends of the adjusting member 67 which define the slit 68 overlapping each other to retract the knob 70. In this way, the opening area adjusting member 67 can be inserted into the large diameter portion 63L such that the knob 70 projects through the knob guide slit 64P.

After the opening area adjusting member 67 has been accommodated in the large diameter portion 63L in this way, it spreads owing to its own elasticity, whereby it is held in contact with the inner surface of the large diameter portion 63L. In this state, it is rotatable relative to the large diameter portion 63L in the circumferential direction thereof.

Since the stationary and rotary slits 64S and 69 overlap, the opening area of the overlapped portions of the two sets of slits 64S and 69 can be varied by rotating the opening area adjusting member 67.

Next, the upper end of the large diameter portion 63L of the tube body 62 is fitted in the lower end of the large diameter portion 66L of the cap 65. In this way, the assembly of the flow regulator 60 is completed.

Now, the adjustment of the opening area of the flow regulator 60 which has been assembled in the above way will be described. By rotating the knob 70 projecting through the knob guide slit 64P up to the end of the knob guide slit 64P as shown in Figure 2, the-opening area of the overlapped portions of the stationary and rotary slits 64S and 69 becomes zero.

By rotating the knob 70 up to the opposite end of the knob guide slit 64P, the opening area becomes maximum.

The opening area of the overlapped portions of the stationary and rotary slits 64S and 69 thus can be varied between zero and the maximum area by rotating the knob 70 within the range defined by the knob guide slit 64P. Thus, with the aquarium tak filter configured by connecting the small diameter portion 63S of the tube body 62 to the second filter mechanism 40 and connecting the small diameter portion 66S of the cap 65 to the connecting pipe 50, it is possible to adjust the ratio between the water W drawn directly through the flow regulator 60 for supply to the first filter mechanism 30 and the water W drawn through the second filter mechanism 40 for supply to the first filter mechanism 30.

As explained in the foregoing, in the aforesaid embodiment of the invention it is possible by rotating the opening area adjusting member 67 to adjust the ratio between the water W drawn directly through the flow regulator 60 and the water W drawn through the second filter mechanism 40 and to supply the water W from both sources to the first filter mechanism 30.

It is thus possible to permit the individual filter mechanisms 30 and 40 to achieve their respective functions.

Since the individual filter mechanisms 30 and 40 thus can achieve their respective functions, clogging of the spaces between the small stones S occurs less easily, and it is thus possible to extend the interval between the water changes and tank cleanings.

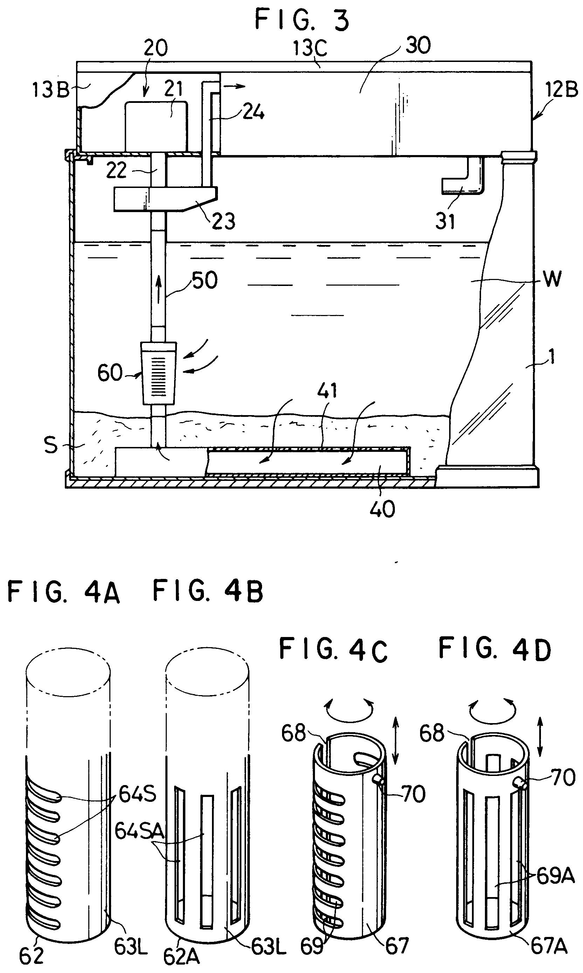

Figures 4A to 4D show different examples of the tube body of the stationary tube and the opening area adjusting member for forming the aquarium tank filter flow regulator of the invention. Parts like those in Figures 1 to 3 are designated by like reference numerals and symbols.

Only the large diameter portion of the tube bodies of the stationary tubes are shown in Figures 4A and 4B, and the knob guide slit is omitted.

Referring to Figure 4B, the tube body of the stationary tube is designated by reference symbol 62A. The peripheral wall of this tube body is formed with a plurality of thin stationary slits 64SA extending in the axial direction and arranged in a row in the circumferential direction.

Referring to Figure 4D, reference symbol 67A designates an opening area adjusting member whose peripheral wall is formed with a plurality of thin rotary slits 69A extending in the axial direction and arranged in a row in the circumferential direction.

The tube bodies 62 and 62A and the opening area adjusting members 67 and 67A have the same diameter at their upper and lower ends.

The tube bodies 62 and 62A and the opening area adjusting members 67 and 67A shown in the Figures 4A to 4D may be suitably combined to obtain the flow regulator 60. By using the tube body 62 shown in Figure 4A and the opening area adjusting member 67 shown in Figure 4C, substantially the same flow regulator 60 as shown in Figures 1 and 2 can be obtained.

In this case, the knob guide slit has the same shape as the knob guide slit 64P.

By using the tube body 62 shown in Figure 4A and the opening area adjusting member 67A shown in Figure 4D to obtain the flow regulator 60, it is possible to vary the opening area of the overlapped portions of the stationary and rotary slits 64S and 69A between zero and the maximum area by sliding the opening area adjusting member 67A in the axial direction.

It is thus possible to obtain the same effects as described before.

In this case, the knob guide slit extends in the axial direction, perpendicular to the knob guide slit 64P, and thus it is the same in shape as the rotary slits 69A.

By using the tube body 62A shown in Figure 4B and the opening area adjusting member 67 shown in Figure 4C to obtain the flow regulator 60, it is possible to vary the opening area of the overlapped portions of the stationary and rotary slits 64SA and 69 between zero and the maximum area by sliding the opening area adjusting member 67 in the axial direction.

It is thus possible to obtain the same effects as described before.

In this case, the knob guide slit extends in the axial direction, perpendicular to the knob guide slit 64P, and thus has the same shape as the stationary slits 64SA.

By using the tube body 62A shown in Figure 4B and the opening area adjusting member 67A shown in Figure 4D to obtain the flow regulator 60, it is possible to vary the opening area of the overlapped portions of the stationary and rotary slits 64SA and 69A between zero and the maximum area by rotating the opening area adjusting member 67A.

It is thus possible to obtain the same effects as described before.

In this case, the knob guide slit has the same shape as the knob guide slit 64P.

While the above examples relate to cases in which the stationary tube 61 is provided with the knob guide slit 64P for guiding the rotation of the knob or with a knob guide slit for guiding the knob in the axial direction, it is possible to provide a knob guide slit which can guide the knob in both the rotational and axial directions, insofaras it can guide the rotation and/or sliding of the opening area adjusting member 67 or 67A.

Thus, in the case of using the tube body 62A shown in Figure 4B and the opening area adjusting member 67A shown in Figure 4D to obtain the flow regulator 60, it is possible to permit variation of the opening area of the overlapped portions of the stationary and rotary slits 64SA and 69A between zero and the maximum area either by merely rotating the opening area adjusting member 67A or by rotating it together with concurrent sliding in the axial direction.

Further, while the above description relates to the case in which an opening area adjusting member 67 or 67A is disposed inside the stationary tube 61, it is possible to constitute the tube body periphery as a recess or the like and mount the opening area adjusting member in the recess for rotation in the circumferential direction of the stationary tube and/or for sliding in the axial direction. In this case, it is possible to dispense with the knob guide slit and the knob 70.

Further, in case of using the flow regulator 60 as an ordinary flow regulator, the open end of the stationary tube 61 may be closed with a cap or the like.

As has been described in the foregoing, the opening area of the overlapped portions of the stationary slits in the stationary tube and the rotary slits in the opening area adjusting member can be varied by causing rotation and/or sliding of the opening area adjusting member. The amount of water drawn into the flow regulator can thus be adjusted by adjusting the opening area of the flow regulator, thus permitting the individual filter mechanisms to achieve their respective functions.

Thus, with the individual filter mechanisms providing their respective functions, since clogging of the spaces among the small stones occurs less readily, the interval between water changes and tank cleanings can be made longer.

## Claims

1. An aquarium tank comprising a first filter mechanism (30) for performing physical filtering, a second filter mechanism (40) for performing biological filtering, a pipe (50) disposed between said first and second filter mechanisms and a filter flow regulator (60) disposed in said pipe (50), characterised in that:
said filter flow regulator (60) is provided for adjusting a ratio of water supplied directly to said first filter mechanism and water supplied through said second filter mechanism to said first filter mechanism; and
said filter flow regulator comprises:
a stationary tube (61) having its peripheral wall formed with a plurality of stationary slits, (64S,64SA); and
an opening area adjusting member (67) disposed for rotation or axial sliding inside said stationary tube and having a plurality of rotary slits (69,69A); overlapping portions of said rotary slits and said stationary slits constituting an opening area that can be varied by rotating or sliding said opening area adjusting member.

2. An aquarium tank according to claim 1, characterised in that,
said stationary tube (61) has a knob guide slit (64p);
said opening area adjusting member (67) comprises a knob (70) projecting through said guide slit; and
said opening area can be varied by moving said knob along said guide slit.

3. An aquarium tank according to claim 1 or claim 2 characterised in that:
said stationary tube (61) comprises a first cylinder; and
said opening area adjusting member (67) comprises a second cylinder.

4. An aquarium tank according to any of claims 1 to 3, characterised in that, said opening area adjusting member (67) is provided with a slit (68) extending in an axial direction.

5. An aquarium tank according to any preceding claim, characterised in that said plurality of stationary slits (64S, 64SA) extend in a circumferential direction and are arranged in an axial direction.

6. An aquarium tank according to any one of claims 1 to 4, characterised in that said plurality of stationary slits (64S, 64SA) extend in an axial direction and are arranged in a circumferential direction.

7. An aquarium tank according to any preceding claim, characterised in that said plurality of rotary slits (69, 69A) extend in a circumferential direction and are arranged in an axial direction.

8. An aquarium tank according to any one of claims 1 to 6, characterised in that said plurality of rotary slits (69, 69A) extend in an axial direction and are arranged in a circumferential direction.

9. An aquarium tank filter flow regulator (60) for use in an aquarium tank according to any preceding claim, characterised by:
a stationary tube (61) having its peripheral wall formed with a plurality of stationary slits, (64S,64SA); and
an opening area adjusting member (67) disposed for rotation or axial sliding inside said stationary tube and having a plurality of rotary slits (69,69A); overlapping portions of said rotary slits and said stationary slits constituting an opening area that can be varied by rotating or sliding said opening area adjusting member.

## Patentansprüche

1. Aquarium mit einem ersten Filtermechanismus (30) für die physikalische Filtrierung des Auqriumwassers, einem zweiten Filtermechanismus (40) für die biologische Filtrierung des Aquariumwassers, einem Rohr (50) zwischen erstem und zweitem Filtermechanismus und einem in das Rohr (50) eingefügten Durchflußregler (60), **dadurch gekennzeichnet, daß**
der Durchflußregler (60) zwischen den beiden Filtern zur Einstellung eines Verhältnisses zwischen dem dem ersten Filtermechanismus direkt zugeführten Wasser und dem Wasser ausgelegt ist, das dem ersten Filtermechanismus durch den zweiten Filtermechanismus zugeführt wird und daß
der Durchflußregler zwischen den beiden Filtern aufweist
ein stationäres Rohr (61) mit einer Umfangswand, die mit einer Mehrzahl ortsfester Schlitze (64S, 64SA) versehen ist und
ein Einstellglied (67) zur Einstellung eines Öffnungsbereiches, das axial oder in Umfangsrichtung verstellbar in dem stationären Rohr angeordnet ist und mit ihm verstellbare Schlitze (69,69A) aufweist, wobei sich die ortsfesten und die verstellbaren Schlitze teilweise überdecken, um einen Öffnungsbereich zu bilden, der durch Verstellen in axialer oder in Umfangsrichtung veränderlich einstellbar ist.

2. Aquarium nach Anspruch 1, **dadurch gekennzeichnet, daß**
das stationäre Rohr (61) einen Schlitz (64p) zur Führung eines in ihm verstellbaren Knopfes aufweist;
das Einstellglied (67) zur Einstellung eines Öffnungsbereiches einen Knopf (70) aufweist, der durch den Schlitz (64p) hindurchragt und
der Öffnungsbereich durch Verstellen des Knopfes im Längsschlitz in dessen Längsrichtung veränderbar ist.

3. Aquarium nach Anspruch 1 oder Anspruch 2, **dadurch gekennzeichnet, daß**
das stationäre Rohr (61) einen ersten Zylinder einschließt und
das Einstellglied (67) zur Einstellung des Öffnungsbereiches einen zweiten Zylinder einschließt.

4. Aquarium nach einem beliebigen der Ansprüche 1 bis 3, **dadurch gekennzeichnet, daß** das Einstellglied (67) für die Einstellung des Öffnungsbereichs mit einem Schlitz (68) versehen ist, der sich in der Längsrichtung des Einstellglieds erstreckt.

5. Aquarium nach einem beliebigen der vorstehenden Ansprüche, **dadurch gekennzeichnet, daß** die Mehrzahl stationärer Schlitze (64S, 64SA) in Umfangsrichtung verlaufen und in axialer Richtung aufeinanderfolgen.

6. Aquarium nach einem beliebigen der Ansprüche 1 bis 4, **dadurch gekennzeichnet, daß** die Mehrzahl stationärer Schlitze (64S,64SA) in axialer Richtung verlaufen und in Umfangsrichtung aufeinanderfolgen.

7. Aquarium nach einem beliebigen der vorstehenden Ansprüche, **dadurch gekennzeichnet, daß** die Mehrzahl verstellbarer Schlitze (69,69A) in Umfangsrichtung verlaufen und in axialer Richtung aufeinanderfolgen.

8. Aquarium nach einem beliebigen der Ansprüche 1 bis 6, **dadurch gekennzeichnet, daß** die Mehrzahl verstellbarer Schlitze (69,69A) in axialer Richtung verlaufen und in Umfangsrichtung aufeinanderfolgen.

9. Aquariumfilterdurchflußregler (60) zur Verwendung bei einem Aquarium nach einem beliebigen der vorstehenden Ansprüche, **gekennzeichnet durch**
ein stationäres Rohr (61) mit einer Umfangswand, in der eine Mehrzahl ortsfester Schlitze (64S,64SA) ausgebildet sind und
ein Einstellglied (67) zur Einstellung eines Öffnungsbereiches, das in Umfangsrichtung oder axial verstellbar in dem stationären Rohr angeordnet ist und eine Mehrzahl drehbarer Schlitze (69,69A) aufweist, wobei sich Teile der drehbaren Schlitze und der ortsfesten Schlitze überdecken, um einen Öffnungsbereich zu bilden, der durch Drehen des Einstellgliedes oder durch dessen Verstellen in Längsrichtung veränderbar ist.

## Revendications

1. Un réservoir d'aquarium comprenant un premier mécanisme de filtrage (30) pour effectuer un filtrage physique, un second mécanisme de filtrage (40) pour effectuer un filtrage biologique, un conduit (50) placé entre lesdits premier et second mécanismes de filtrage et un régulateur de débit de filtrage (60) placé dans ledit conduit (50), caractérisé en ce que :
ledit régulateur de débit de filtrage (60) est prévu pour régler un rapport de l'eau amenée directement audit premier mécanisme de filtrage et de l'eau amenée, par l'intermédiaire dudit second mécanisme de filtrage, audit premier mécanisme de filtrage ; et
ledit régulateur de débit de filtrage comprend :
un tube fixe (61) présentant sa paroi périphérique munie d'un ensemble de fentes fixes (64S, 64SA) ; et
un élément de réglage de surface d'ouverture (67) prévu pour tourner ou coulisser axialement à l'intérieur dudit tube fixe et présentant un ensemble de fentes rotatives (69, 69A) ; des parties se chevauchant desdites fentes rotatives et desdites fentes fixes constituant une surface d'ouverture qui peut être modifiée en faisant tourner ou coulisser ledit élément de réglage de surface d'ouverture.

2. Un réservoir d'aquarium selon la revendication 1, caractérisé en ce que :
ledit tube fixe (61) présente une fente de guidage (64p) d'un bouton ;
ledit élément de réglage de surface d'ouverture (67) comprend un bouton (70) faisant saillie à travers ladite fente de guidage ; et
ladite surface d'ouverture peut être modifiée en déplaçant ledit bouton le long de ladite fente de guidage.

3. Un réservoir d'aquarium selon la revendication 1 ou la revendication 2, caractérisé en ce que :
ledit tube fixe (61) comprend un premier vérin ; et
ledit élément de réglage de surface d'ouverture (67) comprend un second vérin.

4. Un réservoir d'aquarium selon une quelconque des revendications 1 à 3, caractérisé en ce que ledit élément de réglage de surface d'ouverture (67) présente une fente (68) s'étendant dans une direction axiale.

5. Un réservoir d'aquarium selon une revendication précédente quelconque, caractérisé en ce que ledit ensemble de fentes fixes (64S, 64SA) s'étend dans une direction circonférentielle et celles-ci sont disposées dans une direction radiale.

6. Un réservoir d'aquarium selon une quelconque des revendications 1 à 4, caractérisé en ce que ledit ensemble de fentes fixes (64S, 64SA) s'étend dans une direction axiale et celles-ci sont disposées dans une direction circonférentielle.

7. Un réservoir d'aquarium selon une revendication précédente quelconque, caractérisé en ce que ledit ensemble de fentes rotatives (69, 69A) s'étend dans une direction circonférentielle et celles-ci sont disposées dans une direction axiale.

8. Un réservoir d'aquarium selon une quelconque des revendications 1 à 6, caractérisé en ce que ledit ensemble de fentes rotatives (69, 69A) s'étend dans une direction axiale et celles-ci sont disposées dans une direction circonférentielle.

9. Un régulateur (60) de débit de filtrage d'un réservoir d'aquarium utilisable dans un réservoir d'aquarium selon une revendication précédente quelconque, caractérisé par :
un tube fixe (61) présentant sa paroi périphérique munie d'un ensemble de fentes fixes (64S, 64SA) ; et
un élément de réglage de surface d'ouverture (67) prévu pour tourner ou coulisser axialement à l'intérieur dudit tube fixe et présentant un ensemble de fentes rotatives (69, 69A) ; des parties se chevauchant desdites fentes rotatives et desdites fentes fixes constituant une surface d'ouverture qui peut être modifiée en faisant tourner ou coulisser ledit élément de réglage de surface d'ouverture.
